# EUROPÄISCHE PATENTSCHRIFT

(11) **EP 2 951 046 B1**
(45) Veröffentlichungstag und Bekanntmachung des Hinweises auf die Patenterteilung: **29.11.2017**
(21) Anmeldenummer: 14701673.7
(22) Anmeldetag: 18.01.2014
(51) Int. Cl.: B60K 37/06, B60R 16/027, B62D 1/04, G06F 3/03, G06F 3/02, G06F 3/0354, G06F 3/042

(54) **LENKRAD FÜR EIN KRAFTFAHRZEUG MIT DATENÜBERTRAGUNG ÜBER FINGERNAVIGATIONSMODUL UND KRAFTFAHRZEUG MIT EINEM DERARTIGEN LENKRAD**
STEERING WHEEL FOR AN AUTOMOBILE VEHICLE INCLUDING DATA TRANSMISSION VIA FINGER NAVIGATION MODULE AND AUTOMOBILE VEHICLE WITH SUCH STEERING WHEEL
VOLANT POUR VÉHICULE AUTOMOBILE AVEC TRANSMISSION DE DONNÉES PAR UN MODULE DE NAVIGATION AU DOIGT ET VÉHICULE AUTOMOBILE AVEC UN TEL VOLANT

(30) Priorität: 31.01.2013 DE 102013001777
(43) Veröffentlichungstag der Anmeldung: 09.12.2015
(73) Patentinhaber: Daimler AG, 70327 Stuttgart (DE)
(72) Erfinder: ENTENMANN, Volker, 71563 Affalterbach (DE); GERHARDT, Volker, 71101 Schönaich (DE); REISINGER, Jörg, 74369 Löchgau (DE)
(74) Vertreter: JENSEN & SON
(86) Internationale Anmeldenummer: PCT/EP2014/000130
(87) Internationale Veröffentlichungsnummer: WO 2014/117917

(56) Entgegenhaltungen:
- WO-A1-97/13657
- CN-U- 202 389 433
- DE-A1-102006 024 252
- DE-A1-102011 018 234
- US-A1- 2003 023 353

## Beschreibung

Die vorliegende Erfindung betrifft ein Lenkrad für ein Kraftfahrzeug mit einem optischen Fingernavigationsmodul, mindestens einem weiteren Bedienelement, einer Lenkradelektronik und einem Datenbus zur Datenübertragung zwischen dem optischem Fingernavigationsmodul und der Lenkradelektronik.

In den linken und/oder rechten Schalterblock eines Fahrzeuglenkrads kann ein optisches Fingernavigationsmodul (OFN) als Sensor für die Detektion von Fingerbewegungen integriert werden. Mit den Signalen eines derartigen Schalterblocks kann ein Anzeigemenü gesteuert werden. Jeder oder zumindest ein solcher Schalterblock kann zudem mindestens ein weiteres Bedienelement, insbesondere einen Drucktaster, für den Direktzugriff auf bestimmte Funktionen enthalten. Meist besitzt ein Schalterblock mehrere Bedienelemente.

Die Sensordaten des jeweiligen optischen Fingernavigationsmodul und die Betätigungszustände der gegebenenfalls mehreren Bedienelemente müssen von dem jeweiligen Schalterblock zur Weiterverarbeitung übertragen werden. Insbesondere müssen die Sensordaten zur Lenkradelektronik und weiter zu den zu bedienenden HMI-Komponenten (Human Machine Interface), z. B. Kombiinstrument oder Haupteinheit (HU) übermittelt werden.

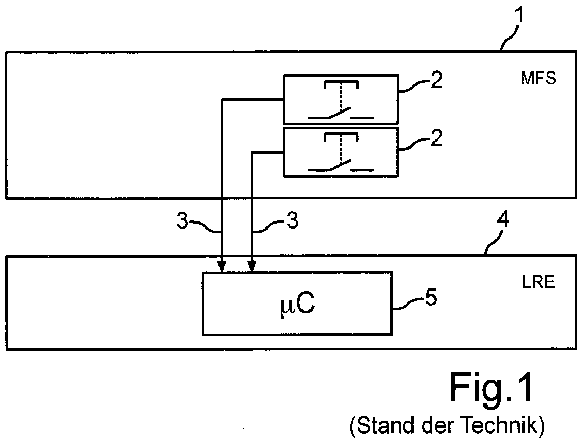

Besitzt ein Schalterblock 1 (MFS; Multifunktionsschalter) eines Lenkrads eines Kraftfahrzeugs beispielsweise gemäß Fig. 1 mehrere Drucktasten 2, so sind die Signale dieser Drucktasten 2 über entsprechende Signalleitungen 3 an eine Lenkradelektronik 4 (LRE) zu übertragen. Die LRE ist in der Regel mit einem Controller 5 ausgestattet, der die Kommunikation mit den Bedienelementen 2 über die Signalleitungen 3 durchführt. Die Schalt- bzw. Betätigungszustände der Bedienelemente 2 des Schalterblocks 1 werden also direkt von dem Controller 5 in der Lenkradelektronik 4 eingelesen. Dafür werden die von der Anzahl der Bedienelemente 2 abhängigen Signalleitungen 3 von jedem der Schalterblöcke 1 eines Lenkrads zur Lenkradelektronik 4 benötigt. Die Anzahl der möglichen Signalleitungen 3 ist dabei durch die Größe der Stecker und den verfügbaren Bauraum innerhalb des Lenkrads begrenzt.

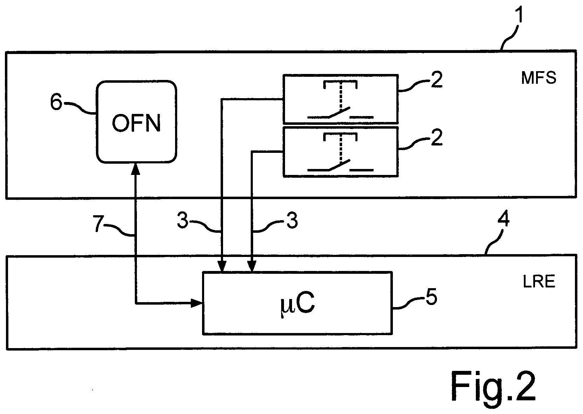

Wie bereits erwähnt kann ein Schalterblock eines Lenkrads auch ein optisches Fingernavigationsmodul 6 als Sensor für die Detektion von Fingerbewegungen beinhalten, wie dies in Fig. 2 skizziert ist. Zusätzlich zu der Struktur von Fig. 1 ist dann mit der Integration des OFN 6 in den Schalterblock 1 eine zusätzliche Datenbusverbindung 7 zwischen dem Controller im OFN 6 und dem Controller 5 in der Lenkradelektronik 4 nötig. Für diese zusätzliche Datenbusleitung bzw. die zusätzlichen Datenbusleitungen und die entsprechenden Stecker fehlt meist der Bauraum. Zudem steigen die Kosten für ein solches Lenkrad mit der Anzahl der Leitungen.

Aus der CN202389433U ist ein Lenkrad mit einem OFN und einem zugehörigen Controller (Host-MCU) bekannt, wobei das OFN mit einem Controller über eine digitale Datenleitung verbunden ist. Weiter ist der Controller mit einem Touchscreen oder einem Display verbunden.

Die Aufgabe der vorliegenden Erfindung besteht somit darin, Bauraum bei der Installation eines optischen Fingernavigationsmoduls und mindestens eines weiteren Bedienelements in einem Lenkrad zu verringern.

Erfindungsgemäß wird diese Aufgabe gelöst durch ein Lenkrad nach Anspruch 1. Vorteilhafte Weiterbildungen der Erfindung ergeben sich aus den Unteransprüchen. Erfindungsgemäß wird demnach bereitgestellt ein Lenkrad für ein Kraftfahrzeug mit
- einem optischen Fingernavigationsmodul,
- mindestens einem weiteren Bedienelement,
- einer Lenkradelektronik und
- einem Datenbus zur Datenübertragung zwischen dem optischen Fingernavigationsmodul und der Lenkradelektronik,
wobei
- das mindestens eine weitere Bedienelement über eine Signalleitung direkt mit dem optischen Fingernavigationsmodul verbunden ist,
- das optische Fingernavigationsmodul (6) und die Lenkradelektronik (4) jeweils einen Controller (5) aufweisen, und die beiden Controller über den Datenbus (7) miteinander kommunizieren, und
- das optische Fingernavigationsmodul dazu ausgebildet ist, ein Signal von dem mindestens einen weiteren Bedienelement aufzunehmen und über den Datenbus an die Lenkradelektronik weiterzuleiten.

In vorteilhafter Weise ist also das mindestens eine weitere Bedienelement über eine Signalleitung direkt mit dem optischen Fingernavigationsmodul verbunden, welches aus ergonomischen Gründen in der Regel nahe bei dem Bedienelement liegt. Zur Übermittlung des Signals von dem Bedienelement zu der Lenkradelektronik kann dann die bereits bestehende Datenbusverbindung zwischen dem optischen Fingernavigationsmodul und der Lenkradelektronik genutzt werden. Folglich kann eine separate Datenleitung von dem Bedienelement zu der entfernt gelegenen Lenkradelektronik vermieden werden.

Vorzugsweise besitzen das optische Fingernavigationsmodul und die Lenkradelektronik jeweils einen Controller, und die beiden Controller kommunizieren über den Datenbus miteinander. Die Kommunikation mittels der Controller hat den Vorteil, dass ein physikalisch einfach gestalteter Datenbus verwendet werden kann.

Das Signal von dem mindestens einen weiteren Bedienelement kann dessen Zustand repräsentieren. Insbesondere kann es sich bei dem Signal um ein binäres Signal handeln, welches den gedrückten oder nicht gedrückten Zustand eines Tasters wiedergibt.

Weiterhin kann das OFN zur Verarbeitung der Signale von dem mindestens einen weiteren Bedienelement und zur Weiterleitung der verarbeiteten Signale an die Lenkradelektronik ausgebildet sein. Dadurch ist es möglich, dass in dem OFN eine dezentrale Vorverarbeitung der Signale des Bedienelements bzw. der Bedienelemente erfolgt.

Die Lenkradelektronik kann außerdem dazu ausgebildet sein, einen Stromsparmodus oder einen Aktivmodus einzunehmen und bei Erhalt eines vorbestimmten Aktivierungssignals von dem OFN von dem Stromsparmodus in den Aktivmodus zu wechseln. Hierdurch ist es möglicht, dass die gesamte Lenkradelektronik solange in einem Stromsparmodus verbleibt, bis sie tatsächlich genutzt wird. In der Regel wird die tatsächliche Nutzung der Lenkradelektronik auf einen geringen Bruchteil des tatsächlichen Kraftfahrzeugbetriebs beschränkt sein.

Das Aktivierungssignal für die Lenkradelektronik kann durch Betätigen des mindestens einen weiteren Bedienelements erzeugbar sein. Somit wird durch ein und dasselbe Bedienelement nicht nur beispielsweise ein Kombiinstrument bedient, sondern mit ihm auch ein Aktivierungssignal (z. B. Wake-Up-Signal) für die Lenkradelektronik erzeugt, Entsprechend einer weiteren Ausgestaltung kann die Verarbeitung der Signale von dem mindestens einen weiteren Bedienelement deren Entprellen beinhalten. Hierdurch kann in kürzerer Zeit die Betätigung des Bedienelements zuverlässig erkannt werden.

Darüber hinaus kann das OFN und das mindestens eine weitere Bedienelement in ein gemeinsames Gehäuse integriert sein. Ein solches Gehäuse stellt beispielsweise das Gehäuse eines Schalterblocks dar, welcher dann als gesamte Einheit mit geringem Aufwand in ein Lenkrad montiert werden kann.

Insgesamt ist es vorteilhaft, wenn ein Kraftfahrzeug mit dem oben beschriebenen Lenkrad ausgestattet ist und somit von der vorliegenden Erfindung profitieren kann.

Die vorliegende Erfindung wird anhand der beigefügten Zeichnungen näher erläutert, in denen zeigen:
- Fig. 1: ein Schaltdiagramm zum direkten Einlesen von Bedienelementen durch die Lenkradelektronik gemäß dem Stand der Technik;
- Fig. 2: eine Schaltskizze zur parallelen Übertragung von Bedienelementsignalen und Daten eines optischen Fingernavigationsmoduls;
- Fig. 3: eine Skizze eines Lenkrads mit optischen Fingernavigationsmodulen; und
- Fig. 4: eine Schaltskizze zur erfindungsgemäßen Übertragung von Bedienelementsignalen über einen Datenbus eines optischen Fingernavigationsmoduls.

Die nachfolgend näher geschilderten Ausführungsbeispiele stellen bevorzugte Ausführungsformen der Erfindung dar.

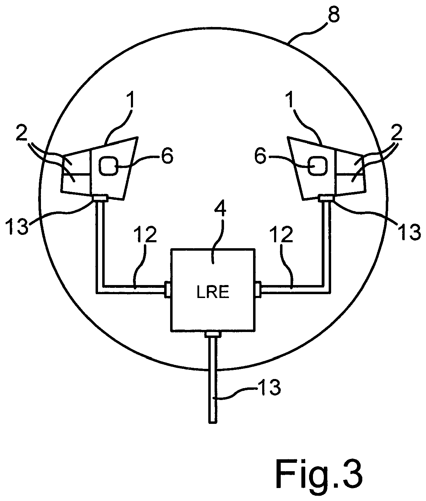

In Fig. 3 ist schematisch ein Lenkrad 8 dargestellt. An dem Lenkrad 8 befinden sich hier in ergonomisch passenden Positionen zwei Schalterblöcke 1, die auch als Multifunktionsschalter (MFS) bezeichnet werden können. Jeder dieser Schalterblöcke 1 ist vorzugsweise dann mit dem jeweiligen Daumen gut erreichbar, wenn der Fahrer seine Hände in typischer Weise während des Fahrbetriebs am Lenkrad hat. In anderen Ausführungsbeispielen ist nur ein derartiger Schalterblock oder es sind mehr als zwei Schalterblöcke bzw. Multifunktionsschalter vorgesehen.

In dem Beispiel von Fig. 3 besitzt jeder Schalterblock 1 ein optisches Fingernavigationsmodul 6 (OFN). Darüber hinaus besitzen die Schalterblöcke 1 jeweils mehrere mechanische Bedienelemente 2. Im vorliegenden Fall weist jeder Schalterblock 1 neben dem OFN 6 zwei Bedienelemente 2 auf. Es kann aber auch nur ein einziges Bedienelement 2 neben dem OFN 6 in einem Schalterblock 1 vorhanden sein. Ebenso können auch mehr als zwei Bedienelemente in dem jeweiligen Schalterblock 1 vorgesehen sein.

Als Bedienelemente eignen sich insbesondere Drucktaster. Des Weiteren können aber auch beispielsweise Druckschalter, Wippschalter, Walzen oder dergleichen als Bedienelemente in jedem der Schalterblöcke vorhanden sein.

Zur Übermittlung der Daten vom linken Schalterblock 9 zu einer Lenkradelektronik 4 (LRE) dient ein Kabel 12, das an seinen Enden jeweils mit Steckern 13 ausgestattet ist. Analog hierzu erfolgt die Kommunikation von dem rechten Schalterblock 1 zu der Lenkradelektronik 4 über ein weiteres Kabel 12. Der Signalausgang von der Lenkradelektronik 4 zu beispielsweise einem Mantelrohrschaltermodul (in Fig. 3 nicht dargestellt) erfolgt über ein zusätzliches Kabel 13.

Wie bereits eingangs erwähnt, dient jedes OFN 6 als Sensor für die Detektion von Fingerbewegungen. Die Kabel 12 dienen zur Realisierung einer Datenbusverbindung zwischen den OFN-Modulen 6 und der Lenkradelektronik 4. Außerdem müssen über die Kabel 12 die Signale der Bedienelemente bzw. des Bedienelements 2 vom jeweiligen Schalterblock 1 zu Lenkradelektronik 4 übermittelt werden. Die Kabel 12 einschließlich ihrer Stecker 13 sollten so klein wie möglich ausgebildet werden, um Bauraum einzusparen.

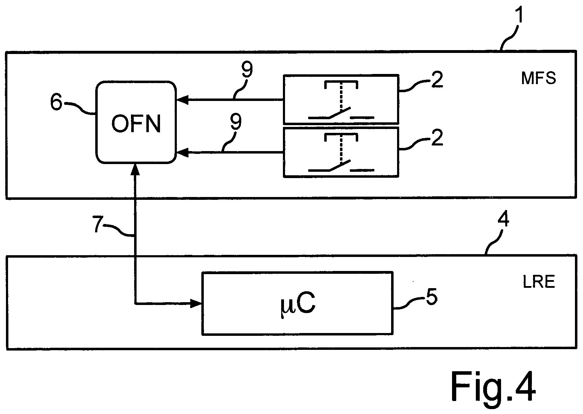

In Fig. 4 ist die Signalübertragung von dem OFN 6 zur LRE 4 und diejenige von den Bedienelementen 2 zu der LRE 4 im Detail dargestellt. Die Bedienelemente 2 des Schalterblocks 1 sind hier als Drucktaster realisiert. Sie können aber auch, wie bereits angedeutet wurde, auch Druckschalter, Wippschalter, Walzen oder dergleichen sein, mit denen eine Funktion direkt gesteuert werden kann. Die Anzahl der Bedienelemente in dem Schalterblock 1 kann ebenfalls variieren. Die Anzahl kann also 1, 2, 3, 4 usw. betragen. Das Signal jedes Bedienelements 2 wird über eine separate Signalleitung 9 jeweils zum OFN 6 geführt. Das OFN 6 besitzt eine Schnittstelle zum Empfang der Signale von den Bedienelementen 2 über die Signalleitungen 9.

Durch einen im OFN 6 enthaltenen Controller (in Fig. 4 nicht dargestellt) können somit die Bedienelemente 2 des Schalterblocks 1 eingelesen werden. Die Daten bzw. Signale der Bedienelemente 2 werden dann zusammen mit denjenigen des OFN über eine Datenbusleitung 7 zum Controller 5 einer Lenkradelektronik 4 übertragen. Somit besteht eine Datenbusverbindung zwischen dem OFN-Controller und dem Controller 5 der Lenkradelektronik 4. Im Betriebsfall werden dann die Zustände (z. B. Schalterstellungen) der Bedienelemente 2 zusammen mit den Sensordaten des OFN 6 über den selben Datenbus 7 übertragen, sodass einige Signalleitungen der Bedienelemente 2 entfallen können.

Zusätzlich kann das OFN 6 auch eine Vorverarbeitung der Bedienelementsignale aus den Signalleitungen 9 übernehmen. Beispielsweise können die Signale der Schalter bzw. Taster (Bedienelemente 2) entprellt werden. Dieses Entprellen kann in dem OFN 6 beispielsweise durch Hardware erfolgen. Hierbei bedient man sich beispielsweise eines Tiefpassfilters, der Hochfrequenzsignalanteile, die durch Kontaktprellen entstehen, unterdrückt. Alternativ kann auch ein Wechselschalter zum Entprellen vorgesehen sein. Daneben kann das Entprellen auch durch Software realisiert werden, wobei eine Zustandsänderung des Kontakts erst dann registriert wird, wenn sie eine bestimmte Zeit vorliegt. Durch das Entprellen der Signale der Bedienelemente kann die Zykluszeit der Datenübertragung auf dem Datenbus größer gewählt werden als die Abtastzeit der Signale in den Signalleitungen 9.

Des Weiteren können durch entsprechende Beschaltungen Zusatzfunktionen über den Datenbus 7 realisiert werden. So kann beispielsweise, wenn sich die Lenkradelektronik in einem Stromsparmodus befindet, ein so genannter "Wake Up" der Lenkradelektronik 4 durch Betätigen eines der Bedienelemente 2 initiiert werden. Dadurch wechselt die Lenkradelektronik 4 von einem Stromsparmodus in einen Aktivmodus. Dazu muss das OFN 6 beispielsweise kontinuierlich nur eine einzige Signalleitung 9 eines Bedienelements 2 in dem Schalterblock 1 abtasten.

Genauer gesagt versorgt die Lenkradelektronik 4, wenn sie eingeschaltet ist, d.h. wenn sie in dem Aktivmodus ist, das OFN 6 mit Energie. Durch eine externe Beschaltung von jeweiligen Leitungen der Datenbusverbindung bzw. Datenbusleitung 7 zum Beispiel mit mehreren Transistoren werden bei vorhandener Versorgungsspannung für das OFN 6 alle Leitungen der Datenbusverbindung dem OFN 6 zugeordnet und zum Übertragen von Datenbussignalen verwendet.

Ist die Lenkradelektronik 4 ausgeschaltet, d.h. in dem Stromsparmodus, versorgt die Lenkradelektronik 4 das OFN 6 nicht mit Energie. In diesem Fall ist durch die externe Beschaltung eine der Leitungen der Datenbusverbindung von dem OFN 6 getrennt und direkt dem Bedienelement 2 bzw. den Bedienelementen 2 zugeordnet, durch dessen bzw. deren Betätigen die Lenkradelektronik 4 aufzuwecken ist. Es wird also eine Leitung der Datenbusverbindung als Wake-Up-Leitung verwendet, wenn das OFN 6 nicht mit Energie versorgt wird, wodurch ein Aufwecken der Lenkradelektronik 4 ohne aktives OFN 6 und damit ohne Ruhestrom durchführbar ist.

Darüber hinaus kann in dem OFN 6 auch eine Vorverarbeitung dahingehend erfolgen, dass die Signale mehrerer Bedienelemente durch eine Logik verknüpft werden. Ebenfalls ist es so möglich, dass über den Datenbus 7 von dem OFN 6 zu der LRE 4 die Signale der Bedienelemente 2 unverarbeitet oder vorverarbeitet übertragen werden.

Durch die vorliegende Erfindung wird im Lenkrad die Anzahl der Leitungen zwischen einerseits dem Schalterblock bzw. den Schalterblöcken mit OFN und andererseits der Lenkradelektronik minimiert. Nur dadurch kann die Integration des OFN in die Schalterblöcke bauraumseitig dargestellt werden. Zudem kann die Anzahl der Bedienelemente im Schalterblock in gewissen Grenzen variiert werden, ohne dass dies Rückwirkungen auf den Kabelsatz zwischen Schalterblock und Lenkradelektronik hat.

## Patentansprüche

1. Lenkrad (8) für ein Kraftfahrzeug mit
- einem optischen Fingernavigationsmodul (6),
- mindestens einem weiteren Bedienelement (2),
- einer Lenkradelektronik (4) und
- einem Datenbus (7) zur Datenübertragung zwischen dem optischen Fingernavigationsmodul (6) und der Lenkradelektronik (4),
**dadurch gekennzeichnet, dass**
- das mindestens eine weitere Bedienelement (2) über eine Signalleitung (9) direkt mit dem optischen Fingernavigationsmodul (6) verbunden ist,
- das optische Fingernavigationsmodul (6) und die Lenkradelektronik (4) jeweils einen Controller (5) aufweisen, und die beiden Controller über den Datenbus (7) miteinander kommunizieren, und
- das optische Fingernavigationsmodul (6) dazu ausgebildet ist, ein Signal von dem mindestens einen weiteren Bedienelement (2) aufzunehmen und über den Datenbus (7) an die Lenkradelektronik (4) weiterzuleiten.

2. Lenkrad nach Anspruch 1
**dadurch gekennzeichnet, dass**
das Signal von dem mindestens einen weiteren Bedienelement (2) dessen Zustand repräsentiert.

3. Lenkrad nach einem der vorhergehenden Ansprüche,
**dadurch gekennzeichnet, dass**
das optische Fingernavigationsmodul (6) zur Verarbeitung der Signale von dem mindestens einen weiteren Bedienelement (2) und zur Weiterleitung der verarbeiteten Signale an die Lenkradelektronik (4) ausgebildet ist.

4. Lenkrad nach einem der vorhergehenden Ansprüche,
**dadurch gekennzeichnet, dass**
die Lenkradelektronik (4) dazu ausgebildet ist, einen Stromsparmodus oder einen Aktivmodus einzunehmen und bei Erhalt eines vorbestimmten Aktivierungssignals von dem optischen Fingernavigationsmodul (6) von dem Stromsparmodus in den Aktivmodus zu wechseln.

5. Lenkrad nach Anspruch 4,
**dadurch gekennzeichnet, dass**
das Aktivierungssignal durch Betätigen des mindestens einen weiteren Bedienelements (2) erzeugbar ist.

6. Lenkrad nach einem der Ansprüche 3 bis 5,
**dadurch gekennzeichnet, dass**
die Verarbeitung der Signale von dem mindestens einen weiteren Bedienelement (2) deren Entprellen beinhaltet.

7. Lenkrad nach einem der vorhergehenden Ansprüche,
**dadurch gekennzeichnet, dass**
das optische Fingernavigationsmodul (6) und das mindestens eine weitere Bedienelement (2) in ein gemeinsames Gehäuse integriert sind.

8. Kraftfahrzeug mit einem Lenkrad (8) nach einem der vorhergehenden Ansprüche.

## Claims

1. Steering wheel (8) for a motor vehicle, having:
- an optical finger navigation module (6),
- at least one further operating element (2),
- a steering wheel electronics unit (4) and
- a data bus (7) for data transmission between the optical finger navigation module (6) and the steering wheel electronics unit (4),
**characterised in that**
- the at least one further operating element (2) is connected via a signal line (9) directly to the optical finger navigation module (6),
- the optical finger navigation module (6) and the steering wheel electronics unit (4) each have a controller (5), and the two controllers communicate with each other via the data bus (7), and
- the optical finger navigation module (6) is designed to record a signal from the at least one further operating element (2) and forward it via the data bus (7) to the steering wheel electronics unit (4).

2. Steering wheel according to claim 1,
**characterised in that**
the signal from the at least one further operating element (2) represents the status thereof.

3. Steering wheel according to one of the preceding claims,
**characterised in that**
the optical finger navigation module (6) is designed for processing the signals from the at least one further operating element (2) and for forwarding the processed signals to the steering wheel electronics unit (4).

4. Steering wheel according to one of the preceding claims,
**characterised in that**
the steering wheel electronics unit (4) is designed to adopt a power saving mode or an active mode and, if a predetermined activation signal is received by the optical finger navigation module (6), to switch from the power saving mode to the active mode.

5. Steering wheel according to claim 4,
**characterised in that**
the activation signal can be generated by activating the at least one further operating element (2).

6. Steering wheel according to one of claims 3 to 5,
**characterised in that**
the processing of the signals from the at least one further operating element (2) includes the debouncing thereof.

7. Steering wheel according to one of the preceding claims,
**characterised in that**
the optical finger navigation module (6) and the at least one further operating element (2) are integrated into a shared housing.

8. Motor vehicle having a steering wheel (8) according to one of the preceding claims.

## Revendications

1. Volant de direction (8) pour un véhicule automobile comprenant
- un module (6) de navigation optique au doigt,
- au moins un autre élément (2) de commande,
- une électronique (4) de volant et
- un bus (7) de données destiné à la transmission de données entre le module (6) de navigation optique au doigt et l'électronique (4) de volant de direction,
**caractérisé en ce que**
- l'au moins un autre élément (2) de commande est relié directement au module (6) de navigation optique au doigt au moyen d'une conduite (9) de signaux,
- le module (6) de navigation optique au doigt et l'électronique (4) de volant de direction présentent respectivement un organe (5) de commande et les deux organes de commande communiquent entre eux au moyen du bus (7) de données, et
- le module (6) de navigation optique au doigt est conçu pour recevoir un signal en provenance de l'au moins un autre élément (2) de commande et le transmettre par l'intermédiaire du bus (7) de données à l'électronique (4) de volant de direction.

2. Volant de direction selon la revendication 1, **caractérisé en ce que** le signal représente l'état de l'au moins un autre élément (2) de commande.

3. Volant de direction selon l'une quelconque des revendications précédentes, **caractérisé en ce que** le module (6) de navigation optique au doigt est conçu pour traiter les signaux provenant de l'au moins un autre élément (2) de commande et pour transmettre les signaux traités à l'électronique (4) de volant de direction.

4. Volant de direction selon l'une quelconque des revendications précédentes, **caractérisé en ce que** l'électronique (4) de volant de direction est conçue pour adopter un mode d'économie d'énergie ou un mode actif et lors de la réception d'un signal d'activation prédéfini provenant du module (6) de navigation au doigt pour passer d'un module d'économie d'énergie au mode actif.

5. Volant de direction selon la revendication 4, **caractérisé en ce que** le signal d'activation se produit par l'actionnement de l'au moins un autre élément (2) de commande.

6. Volant de direction selon l'une quelconque des revendications 3 à 5, **caractérisé en ce que** le traitement des signaux provenant de l'au moins un autre élément (2) de commande consiste à effectuer un effet anti-rebond.

7. Volant de direction selon l'une quelconque des revendications précédentes, **caractérisé en ce que** le module (6) de navigation optique au doigt et l'au moins un autre élément (2) de commande sont intégrés dans un boîtier commun.

8. Véhicule équipé d'un volant de direction (8) selon l'une quelconque des revendications précédentes.
